(19) Europäisches Patentamt
European Patent Office
Office européen des brevets

(11) **EP 4 434 944 A1**

(12) **EUROPEAN PATENT APPLICATION**
published in accordance with Art. 153(4) EPC

(43) Date of publication:
**25.09.2024 Bulletin 2024/39**

(21) Application number: **23776559.9**

(22) Date of filing: **12.09.2023**

(51) International Patent Classification (IPC):
**C02F 3/00** (2023.01)   **C02F 3/30** (2023.01)
**G06N 20/00** (2019.01)

(52) Cooperative Patent Classification (CPC):
**C02F 3/006;** C02F 3/30; C02F 2209/006;
Y02W 10/10

(86) International application number:
**PCT/CN2023/118126**

(87) International publication number:
**WO 2024/159750 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nanjing University
Nanjing, Jiangsu 210009 (CN)**

(72) Inventors:
• **WANG, Jinfeng
  Nanjing, Jiangsu 210009 (CN)**
• **HU, Jie
  Nanjing, Jiangsu 210009 (CN)**
• **REN, Jie
  Nanjing, Jiangsu 210009 (CN)**

(74) Representative: **Murgitroyd & Company
165-169 Scotland Street
Glasgow G5 8PL (GB)**

(54) **BIOLOGICAL WASTEWATER TREATMENT PROCESS RECONSTRUCTION METHOD AND SYSTEM BASED ON MACHINE LEARNING**

(57)    Disclosed in the present invention is a method and system based on machine learning for reconstructing biological wastewater treatment processes. The method includes: acquiring influent and effluent basic quality, ecological risk and process information data on the biological wastewater treatment process, and performing data preprocessing; performing feature extraction and multi-unit characterization on the biological wastewater treatment process; constructing effluent basic quality prediction models and effluent ecological risk prediction models of different biological treatment multi-unit combination processes, and performing standard-reaching validation; simulating and reconstructing different biological wastewater treatment short-range unit combination processes, and performing effluent quality standard-reaching validation under different influent quality scenarios; and evaluating ecological risk of the reconstructed short-range biological treatment unit combination processes with the effluent quality up to standard, and determining the optimal biological wastewater treatment process. The present invention can determine, aiming at different influent quality scenarios, the new biological treatment process that satisfies the requirements that the effluent basic quality reaches the standard and the biological risk is the lowest, and overcomes the selection limitation of an existing biological treatment process method.

FIG. 1

**Description**

**TECHNICAL FIELD**

The present invention relates to a wastewater treatment technology, and in particular to a method and system based on machine learning for reconstructing biological wastewater treatment processes.

**BACKGROUND ART**

A sewage treatment plant is an important place to solve the purification and up-to-standard discharge problems of production sewage and domestic sewage, and a biological treatment method is one of the most widely used wastewater treatment technologies in the sewage treatment plant. The most common biological treatment processes include anaerobic-anoxic-oxic or anoxic-anaerobic-oxic ($A_2O$) process, anoxic-oxic or anaerobic-oxic (AO) process, oxidation ditch (OD) process, membrane bio-reactor (MBR) process and cyclic activated sludge technology (CAST) process.

At present, there are few studies on the reconstruction of new biological wastewater treatment processes, most of which are only applicable to specified application scenarios and the implementation conditions are harsh. Biological wastewater treatment processes for simultaneous removal of nitrogen, phosphorus and sulfur are disclosed in the Chinese patent with the application No. 202310107389.9. The method achieves simultaneous removal of three pollutants of nitrogen, phosphorus and sulfur under a low carbon-nitrogen ratio by means of alternate reactions in an anaerobic stage and an anoxic stage. A method for rapidly achieving short-range deep nitrogen removal by using an SBR process is disclosed in the Chinese patent with the application No. 200810104988.0. The method includes the processes of water feeding, aeration, adding equal amount of raw sewage, aeration, adding an additional carbon source, aeration, sedimentation drainage and idleness, so as to achieve the short-range deep nitrogen removal by using the SBR process of wastewater with a low carbon-nitrogen ratio. A method for achieving short-range deep nitrogen removal under a low temperature condition is disclosed in the Chinese patent with the application No. 200810104989.5. This method includes the steps of nitrogen removal start-up, stabilization and temperature reduction stages, each of which includes water inlet, aeration, denitrification, precipitation, drainage, sludge discharge and idleness, thereby achieving stable nitrogen removal under the low temperature condition. The above method optimizes and modifies the existing biological treatment process method, and strengthens water purification capacity of one or more pollutants in a specific application scenario by adding exogenous substances, changing reaction conditions and the like. When water purification and ecological risk control requirements cannot be satisfied in different application scenarios, there are still a lot of limitations, which cannot satisfy the increasing demand for wastewater treatment.

**SUMMARY**

Objective of the invention: The present invention aims at providing a method and system based on machine learning for reconstructing biological wastewater treatment processes, which can determine, aiming at different influent quality scenarios, the new biological treatment process that satisfies the requirements that the effluent basic quality reaches the standard and the biological risk is the lowest, and overcomes the selection limitation of an existing biological treatment process method.

Technical solution: a method based on machine learning for reconstructing biological wastewater treatment processes provided by the present invention includes the following steps:

(1) acquiring influent and effluent basic quality, ecological risk and process information data on the biological wastewater treatment process, and performing data preprocessing;
(2) performing feature extraction and multi-unit characterization on the biological wastewater treatment process;
(3) constructing effluent basic quality prediction models and effluent ecological risk prediction models of different biological treatment multi-unit combination processes, and performing standard-reaching validation;
(4) simulating and reconstructing different biological wastewater treatment short-range unit combination processes, and performing effluent quality standard-reaching validation under different influent quality scenarios; and
(5) evaluating ecological risk of the reconstructed short-range biological treatment unit combination processes with the effluent quality up to standard, and determining the optimal biological wastewater treatment process.

Preferably, in step (1), the influent and effluent basic quality of the biological wastewater treatment process includes chemical oxygen demand, ammonia nitrogen, total nitrogen, total phosphorus, suspended matter, biochemical oxygen demand, animal and vegetable oils, petroleum, nitrate nitrogen, total organic carbon, dissolved oxygen, temperature, pH value and number of fecal coliforms. The influent and effluent ecological risk data includes micro-pollutant content, biological toxicity, etc., and the process information of the biological wastewater treatment process includes information data on an activated-sludge-method biological wastewater treatment process.

Preferably, step (2) includes:

performing feature extraction on a biological tank link of the activated-sludge-method biological wastewater treatment process, and dividing the biological tank link into three feature units of an oxic tank, an anoxic tank and an anaerobic tank according to dissolved oxygen; and performing multi-unit characterization on the activated-sludge-method biological wastewater treatment process according to the extracted feature units.

Preferably, methods for the multi-unit characterization include a one-hot algorithm.

Preferably, the performing multi-unit characterization on the biological treatment process by using the one-hot algorithm includes:

firstly, characterizing an oxic tank unit as [1, 0, 0], an anoxic tank unit as [0, 1, 0], an anaerobic tank unit as [0, 0, 1], and a blank unit as [0, 0, 0]; and

secondly, performing feature stitching on the biological tank units, and uniformly characterizing the activated-sludge-method biological wastewater treatment process with n units, where blank units are used for supplementation when the number of units for characterizing the process is insufficient.

Preferably, in step (3), the constructing effluent basic quality prediction models of different biological treatment multi-unit combination processes includes:

determining an input influent quality feature set and presetting an effluent quality target; selecting different machine learning algorithms to establish effluent basic quality prediction models of different biological treatment multi-unit combination processes based on the input influent quality feature set, and performing cross-validation experiments to evaluate the performance of the prediction models to obtain the optimal effluent basic quality prediction model; and screening out the effluent basic quality prediction models which satisfy the preset effluent quality target. The effluent quality target includes but not limited to effluent total phosphorus, effluent total nitrogen, ammonia nitrogen, nitrate nitrogen, biochemical oxygen demand, total organic carbon, etc. One or more different effluent basic quality prediction models may be constructed, and standard-reaching validation screening is performed for screening.

Preferably, in step (3), the constructing effluent ecological risk prediction models of different biological treatment multi-unit combination processes includes:

determining an input influent quality feature set and presetting an ecological risk target; selecting different machine learning algorithms to establish effluent ecological risk prediction models of different biological treatment multi-unit combination processes based on the input influent quality feature set, and performing cross-validation experiments to evaluate the performance of the prediction models to obtain the optimal effluent ecological risk prediction model; and screening out the effluent ecological risk prediction models which satisfy the preset ecological risk target. The ecological risk target includes but not limited to a micro-pollutant content, biological toxicity, etc.

Preferably, when the cross-validation experiments are performed to evaluate the performance of the prediction models, the following three evaluation indexes are employed, and calculation methods for various indexes are:

$$\begin{cases} MAE = \frac{1}{n}\sum_{i=1}^{n}|y_i - \hat{y}_i| \\ MSE = \frac{1}{n}\sum_{i=1}^{n}(y_i - \hat{y}_i)^2 \\ R^2 = 1 - \frac{\sum_{i=1}^{n}(y_i - \hat{y}_i)^2}{\sum_{i=1}^{n}(y_i - \bar{y})^2} \end{cases}$$

where $y_i$ represents a true value, $\hat{y}_i$ represents a predicted value, $\bar{y}$ represents a mean of a sample, MAE represents a mean absolute error between the predicted value and the true value, MSE represents a mean squared error between the predicted value and the true value, and $R^2$ represents the overall performance of the prediction models.

Preferably, step (4) includes:

(4.1) simulating and reconstructing all possible short-range biological wastewater treatment processes combined by different amounts of units, and uniformly characterizing the reconstructed short-range combinations with n units; and

(4.2) under different influent quality scenarios, predicting the effluent quality of each reconstructed short-range biological treatment unit combination process, and screening out the reconstituted short-range biological wastewater treatment multi-unit combination processes which satisfy the preset effluent quality target.

A system based on machine learning for reconstructing biological wastewater treatment processes provided by the present invention includes:

a data acquisition and preprocessing module configured to acquire influent and effluent basic quality, ecological risk and process information data on the biological wastewater treatment process and perform data preprocessing;

a feature extraction and characterization module configured to perform feature extraction and multi-unit characterization on the biological wastewater treatment process;

a prediction model construction module configured to construct effluent basic quality prediction models and effluent ecological risk prediction models of different biological treatment multi-unit combination processes;

a biological wastewater treatment process reconstruction and standard-reaching validation module configured to simulate and reconstruct all possible short-range biological wastewater treatment processes, perform effluent quality standard-reaching validation under different influent quality scenarios, and screen out the reconstituted short-range biological wastewater treatment multi-unit combination processes which satisfy the preset ecological risk target; and

a biological wastewater treatment process determination module configured to evaluate ecological risk of the reconstructed short-range biological treatment unit combination processes with the effluent quality up to standard based on the effluent ecological risk predication models, and determine the optimal biological wastewater treatment process according to ecological risk control effects.

Beneficial effects: compared with prior art, the present invention has the following outstanding advantages: 1. Multi-unit characterization is performed on the biological treatment process, such that a reasonable and effective biological treatment process reconstruction method is proposed. This method can determine, aiming at different influent quality scenarios, the new biological treatment process that satisfies the requirements that the effluent basic quality reaches the standard and the biological risk is the lowest, and overcomes the selection limitation of an existing biological treatment process method. 2. The models are established by using knowledge and process data on the wastewater treatment process, such that the effluent quality and biological risk indexes of a biological treatment process of a sewage treatment plant can be accurately predicted for different influent quality scenarios.

## BRIEF DESCRIPTION OF THE DRAWINGS

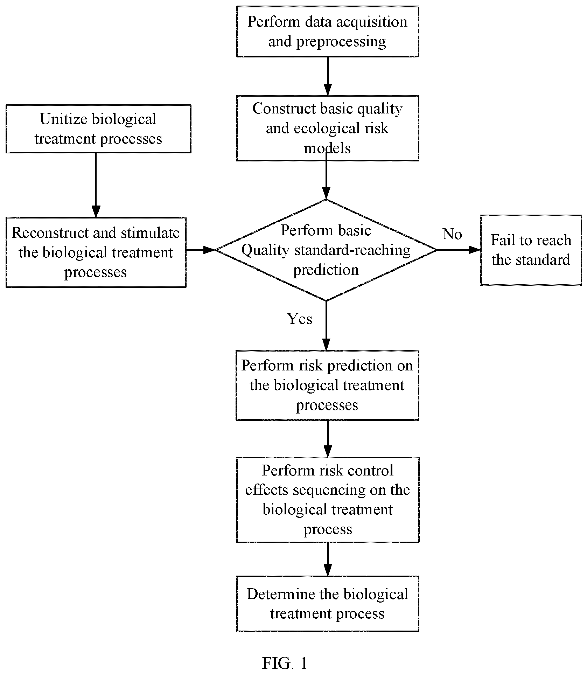

FIG. 1 is a flow diagram of the method of the present invention.

## DETAILED DESCRIPTION OF THE EMBODIMENTS

The technical solutions of the present invention will be further described below with reference to the accompanying drawings.

As shown in FIG. 1, a method based on machine learning for reconstructing biological wastewater treatment processes provided by the present invention includes the following steps:

(1) acquire basic quality, ecological risk and process information data on the biological wastewater treatment process of a sewage treatment plant and perform data preprocessing.

Acquire influent and effluent basic quality, ecological risk and biological treatment process information data on the sewage treatment plant, where the influent and effluent basic quality features include chemical oxygen demand, ammonia nitrogen, total nitrogen, total phosphorus, suspended matter, biochemical oxygen demand, animal and vegetable oils, petroleum, nitrate nitrogen, total organic carbon, dissolved oxygen, temperature, pH value and number of fecal coliforms, and the influent and effluent ecological risk data includes a micro-pollutant content, biological toxicity, etc.; and acquire information data of an activated-sludge-method biological wastewater treatment process employed in the sewage treatment plant.

Perform data preprocessing on basic quality and ecological risk data of the sewage treatment plant, where the data preprocessing method includes abnormal data processing, default data processing, outlier data processing, repeatability and consistency testing, data normalization and standardization, etc.

(2) Perform feature extraction and multi-unit characterization on the biological wastewater treatment process.

Perform feature extraction on a biological tank link of the activated-sludge-method biological wastewater treatment process, which specifically includes: divide the biological tank link into three feature units of an oxic tank, an anoxic tank and an anaerobic tank according to dissolved oxygen. Then, perform multi-unit characterization on the activated-sludge-method biological wastewater treatment process by using the methods not limited to a one-hot algorithm.

The method for performing multi-unit characterization on the biological treatment process by using the one-hot algorithm includes:

firstly, characterize an oxic tank unit as [1, 0, 0], an anoxic tank unit as [0, 1, 0], an anaerobic tank unit as [0, 0, 1], and a blank unit as [0, 0, 0]; and

secondly, uniformly characterize the activated-sludge-method biological wastewater treatment process with n units, where blank units are used for supplementation when the number of units, for characterizing the process, of the biological tank link is smaller than n, and the feature dimension characterized by n units is $3 \times n$. For example, three units of an anaerobic-anoxic-oxic process in the biological wastewater treatment process are characterized as [0,0,1,0,1,0,1,0,0], two units of an anaerobic-oxic process are characterized as [0,0,1,1,0,0], and three units are characterized as [0,0,1,1,0,0,0,0,0].

(3) Construct effluent basic quality prediction models and effluent ecological risk prediction models of different biological treatment n-unit combination processes, and perform standard-reaching validation.

The step specifically includes the following steps:

(3.1) construct effluent basic quality prediction models of different biological treatment n-unit combination processes, which specifically includes:

determine, from the basic quality features, subjected to data preprocessing, of the biological treatment process in step (1), an input influent quality feature set, and predict an effluent quality target, where the effluent quality target includes ammonia nitrogen, total nitrogen, total phosphorus, nitrate nitrogen, total organic carbon, etc. One or more effluent basic quality prediction models may be constructed on the basis of different effluent qualities.

Select different machine learning algorithms to establish effluent basic quality prediction models of different biological treatment n-unit characterization combination processes based on the input influent quality feature set, and perform cross-validation experiments to evaluate the performance of the prediction models to obtain the optimal effluent basic quality prediction model. Screen out, according to whether prediction results of the models satisfy the preset effluent quality target, the effluent basic quality prediction model with the effluent quality up to standard.

(3.2) Construct effluent ecological risk prediction models of different biological treatment n-unit combination processes, which specifically includes:

determine, from the basic quality and ecological risk features, subjected to data preprocessing, of the biological treatment process in step (1), an input influent quality feature set, and predict an ecological risk target.

Select different machine learning algorithms to establish ecological risk prediction models of different biological treatment n-unit characterization combination processes based on the input influent quality feature set, and perform cross-validation experiments to evaluate the performance of the prediction models to obtain the optimal ecological risk prediction model. Screen out, according to whether prediction results of the models reach the preset ecological risk target, the effluent ecological risk prediction model with the ecological risk up to standard.

When the cross-validation experiments are performed to evaluate the performance of the established effluent basic quality prediction models and ecological risk prediction models, the following three evaluation indexes are employed, and calculation methods for various indexes are:

$$
\begin{cases}
MAE = \frac{1}{n}\sum_{i=1}^{n}|y_i - \hat{y}_i| \\
MSE = \frac{1}{n}\sum_{i=1}^{n}(y_i - \hat{y}_i)^2 \\
R^2 = 1 - \frac{\sum_{i=1}^{n}(y_i - \hat{y}_i)^2}{\sum_{i=1}^{n}(y_i - \bar{y})^2}
\end{cases}
$$

where $y_i$ represents a true value, $\hat{y}_i$ represents a predicted value, MAE represents a mean absolute error between the predicted value and the true value, MSE represents a mean squared error between the predicted value and the true value, the smaller MAE and MSE values are, and the better the predication performance of the models is; $R^2$ represents the overall performance of the prediction models, the greater the value is, the better the prediction performance of the models is, and a value range of $R^2$ is 0-1; and $\bar{y}$ represents a mean of the true value, and a calculation formula is:.

$$
\bar{y} = \frac{1}{n}\sum_{i=1}^{n} y_i.
$$

(4) Simulate and reconstruct different activated-sludge-method biological wastewater treatment short-range unit combination processes, and perform basic quality standard-reaching validation under different influent quality scenarios. The step specifically includes:

(4.1) simulate and reconstruct all possible short-range biological wastewater treatment processes, and uniformly characterize the short-range unit combination with n units, serving biological process information input variables as prediction models, where the short-range unit combination includes two-unit combination, three-unit combination, four-unit combination, etc.

(4.2) Under different influent quality scenarios, predict the effluent quality of the short-range biological treatment unit combination processes reconstructed in step (4.1) by using the trained optimal effluent basic quality prediction model of the biological treatment n-unit characterization combination process in step (3.1), and determine whether prediction results satisfy the preset effluent quality target, where inputs of the effluent basic quality prediction models are input features determined in step (3.1) and the simulated and reconstructed biological wastewater treatment short-range unit combination process in step (4.1), and outputs of the models are effluent quality prediction results, from which the reconstructed short-range biological treatment unit combination processes with the prediction result satisfying the effluent quality target are screened out, namely, the reconstructed short-range biological treatment unit combination processes with the effluent quality up to standard.

(5) Evaluate ecological risk of the reconstructed short-range biological treatment unit combination process with the effluent quality up to standard based on the effluent ecological risk predication models, and determine the biological wastewater treatment process according to ecological risk control effects.

Predict the ecological risk of the reconstituted short-range biological treatment unit combination process with the effluent quality up to standard in step (4.2) by using the trained effluent ecological risk prediction models of the biological treatment n-unit characterization combination process in step (3.2), where inputs of the ecological risk prediction models are input features determined in step (3.2) and the reconstructed short-range biological treatment unit combination processes with the effluent quality up to standard screened in step (4.2), and outputs of the models are ecological risk prediction results; and screen out the reconstructed biological treatment process short-range unit combination processes with the prediction result satisfying the effluent ecological risk target again, and determine the optimal biological wastewater treatment process according to ecological risk control effects.

To further illustrate the method of the present invention, biological wastewater treatment process data were acquired from wastewater treatment plants with different biological wastewater treatment processes throughout the country. The specific steps for reconstructing biological wastewater treatment processes are as follows:

(1) Basic quality, ecological risk and specific activated-sludge-method biological wastewater treatment process information data of 180 sewage treatment plants from Shanghai, Jiangsu, Guangdong, Henan, Yunnan and other provinces and cities was acquired, and data preprocessing was performed.

The influent and effluent basic quality features included ammonia nitrogen, total nitrogen, total phosphorus, nitrate nitrogen, total organic carbon, temperature and pH value, and influent and effluent ecological risk data included biological toxicity.

The basic quality and ecological risk data of the sewage treatment plants were preprocessed. The data preprocessing method included abnormal data processing, default data processing, outlier data processing, repeatability and consistency testing, data normalization and standardization, etc.

(2) Feature extraction and short-range multi-unit characterization were performed on the biological wastewater treatment processes.

Each link of the activated-sludge-method biological wastewater treatment process of the sewage treatment plants was unitized, and a biological tank unit was divided into three feature units of an oxic tank, an anoxic tank and an anaerobic tank according to dissolved oxygen for feature extraction. Short-range multi-unit characterization combination was performed on the activated-sludge-method biological wastewater treatment process by using the methods not limited to one-hot algorithm.

The method for performing multi-unit characterization on the biological treatment process by using the one-hot algorithm included:

firstly, an oxic tank unit was characterized as [1, 0, 0], an anoxic tank unit as [0, 1, 0], an anaerobic tank unit as [0, 0, 1], and a blank unit as [0, 0, 0].

Secondly, four-unit characterization was uniformly performed on the activated-sludge-method biological wastewater treatment process, where blank units were used for supplementation when the number of biological tank units for characterizing the process was smaller than 4, and the feature dimension characterized by four units is 12. The four units of an anaerobic-anoxic-oxic process in the biological wastewater treatment process were characterized as [0,0,1,0,1,0,1,0,0,0,0,0], and four units of an anaerobic-oxic process were characterized as [0,0,1,1,0,0,0,0,0,0,0,0].

(3) Effluent basic quality prediction models and effluent ecological risk prediction models in the biological treatment processes were constructed, and standard-reaching validation was performed.

The step specifically includes the following steps:

(3.1) Effluent basic quality prediction models of the biological treatment processes were constructed and standard-reaching validation was performed, which specifically included:

An input influent quality feature set was determined, and an effluent quality target was predicted. The influent quality feature set was of total phosphorus, total nitrogen, ammonia nitrogen, nitrate nitrogen, total organic carbon, temperature and pH value, and the effluent quality target was set as an effluent total nitrogen removal rate of 60%.

Support vector machine and random forest algorithms were selected to establish effluent basic quality prediction models of different short-range biological treatment four-unit characterization combination processes based on the input influent quality feature set, and cross-validation experiments were performed to evaluate the performance of the prediction models to obtain the optimal effluent basic quality prediction model. According to whether prediction results of the models reached the preset effluent total nitrogen removal rate of 60%, the effluent basic quality prediction model with the effluent quality up to standard was screened out.

(3.2) Effluent ecological risk prediction models of the biological treatment processes were constructed and standard-reaching validation was performed, which specifically included:

An input influent quality feature set was determined, and an ecological risk target was preset. The influent quality feature set was of total phosphorus, total nitrogen, ammonia nitrogen, nitrate nitrogen, total organic carbon, temperature and pH value, and the ecological risk target was set as a biological toxicity reduction rate of 60%.

Support vector machine and random forest algorithms were selected to establish effluent ecological risk prediction models of different short-range biological treatment four-unit characterization combination processes based on the input influent quality feature set, and cross-validation experiments were performed to evaluate the performance of the prediction models to obtain the optimal effluent ecological risk prediction model. According to whether prediction results of the models reached the preset biological toxicity reduction rate of 60%, the effluent ecological risk prediction model with the effluent ecological risk up to standard was screened out.

When the cross-validation experiments were used for evaluating the performance of the established effluent basic quality prediction models and ecological risk prediction models, the three evaluation indexes of MAE, MSE and $R^2$ were employed for evaluation. Results are shown in Table 1 below. It can be seen from Table 1 that when the support vector machine method is employed, the effluent basic quality prediction model has a relatively small evaluation index value, and when the random forest method is employed, the effluent ecological risk prediction model has a relatively small evaluation index value. Therefore, the support vector machine algorithm is selected to construct the optimal effluent basic quality prediction model, and the random forest algorithm is selected to construct the optimal effluent ecological risk prediction model.

Table 1 Evaluation index results of different prediction models

| Model        Index | MAE | MSE | $R^2$ |
|---|---|---|---|
| Basic quality-support vector machine prediction model | 0.135 | 0.067 | 0.891 |
| Basic quality-random forest prediction model | 0.219 | 0.089 | 0.864 |
| Ecological risk-support vector machine prediction model | 0.239 | 0.097 | 0.796 |
| Ecological risk-random forest prediction model | 0.176 | 0.078 | 0.838 |

(4) Different biological wastewater treatment short-range unit combination processes were simulated and reconstructed, and effluent quality standard-reaching validation was performed on the basis of the optimal effluent basic quality prediction model constructed in step (3), where the specific steps were as follows:

(4.1) all possible biological wastewater treatment two-unit, three-unit and four-unit combination processes were stimulated and reconstructed, and four-unit characterization was uniformly performed on the above short-range unit combination processes by using the one-hot algorithm; and

(4.2) Under different influent quality scenarios, for example, when total phosphorus was 2 mg/L, total nitrogen was 15 mg/L, ammonia nitrogen was 13.5 mg/L, nitrate nitrogen was 1 mg/L, total organic carbon was 30 mg/L, temperature was 25 °C and pH value was 6.5, the trained optimal effluent basic quality prediction model of the four-unit characterization combination process in step (3.1) was used for predicting the effluent quality of different reconstituted wastewater biological treatment four-unit characterization combination processes. Prediction results were shown in Table 2 below, and whether the prediction results satisfied the preset effluent quality target (total nitrogen removal rate of 60%) was determined, that is, whether the total nitrogen of the effluent was less than 6 mg/L was determined, and the reconstituted short-range biological treatment unit combination processes with the effluent quality up to standard were screened out.

(5) Ecological risk of the reconstructed short-range biological treatment unit combination processes with the effluent quality up to standard was predicted respectively, and the optimal biological wastewater treatment process was determined from the reconstructed biological treatment processes up to standard according to ecological risk control effects. The specific steps were as follows:

For the reconstituted biological treatment short-range unit combination processes with the effluent quality up to standard in step (4.2), the trained effluent ecological risk model of the four-unit characterization combination process in step (3.2) was used for predicting the ecological risk, and comparison with the preset ecological risk target (biological toxicity reduction rate of 60%) was performed as shown in Table 2. Ecological risk control effects of the different reconstructed short-range biological treatment unit combination processes were evaluated, and the optimal biological wastewater treatment short-range unit combination process was selected.

Table 2 Effluent basic quality and ecological risk prediction results of reconstructed biological wastewater treatment units

| Biological wastewater treatment unit combination | Total nitrogen removal rate (%) | Biological toxicity reduction rate (%) |
|---|---|---|
| Anaerobic-oxic-anoxic-oxic | 71.27 | 67.3 |
| Anaerobic-anoxic-oxic-anoxic | 64.67 | 66.1 |
| Oxic-anoxic-anaerobic-oxic | 68.16 | 65.4 |
| Anoxic-anaerobic-oxic-anoxic | 66.18 | 63.5 |
| Anaerobic-anoxic-oxic | 62.76 | 62.8 |
| Oxic-anoxic-anaerobic | 60.86 | 61.6 |
| Anoxic-anaerobic-oxic | 63.14 | 61.1 |
| Anoxic-oxic | 61.46 | 60.3 |

It can be seen from Table 2 that under the current quality scenario, the effluent basic quality and ecological risk prediction results of the above reconstructed biological wastewater treatment short-range unit combination processes satisfy the preset targets. According to the ecological risk control effects, the biological wastewater treatment short-range unit combination process with the highest biological toxicity reduction rate is selected as the anaerobic-oxic-anoxic-oxic combination process, and the biological toxicity reduction rate reaches 67.3%.

**Claims**

1. A method based on machine learning for reconstructing biological wastewater treatment processes, comprising the following steps:

(1) acquiring influent and effluent basic quality, ecological risk and process information data on the biological wastewater treatment process, and performing data preprocessing;

(2) performing feature extraction and multi-unit characterization on the biological wastewater treatment process;

(3) constructing effluent basic quality prediction models and effluent ecological risk prediction models of different biological treatment multi-unit combination processes, and performing standard-reaching validation;

(4) simulating and reconstructing different biological wastewater treatment short-range unit combination processes, and performing effluent quality standard-reaching validation under different influent quality scenarios; and

(5) evaluating ecological risk of the reconstructed short-range biological treatment unit combination processes with the effluent quality up to standard, and determining the optimal biological wastewater treatment process.

2. The method based on machine learning for reconstructing biological wastewater treatment processes according to claim 1, wherein in step (1), the influent and effluent basic quality of the biological wastewater treatment process comprises chemical oxygen demand, ammonia nitrogen, total nitrogen, total phosphorus, suspended matter, biochemical oxygen demand, animal and vegetable oils, petroleum, nitrate nitrogen, total organic carbon, dissolved oxygen, temperature, pH value and number of fecal coliforms; and the influent and effluent ecological risk data comprises micro-pollutant content, biological toxicity, etc., and the process information of the biological wastewater treatment process comprises information data on an activated-sludge-method biological wastewater treatment process.

3. The method based on machine learning for reconstructing biological wastewater treatment processes according to claim 1, wherein step (2) comprises:
performing feature extraction on a biological tank link of the activated-sludge-method biological wastewater treatment process, and dividing the biological tank link into three feature units of an oxic tank, an anoxic tank and an anaerobic tank according to dissolved oxygen; and performing multi-unit characterization on the activated-sludge-method biological wastewater treatment process according to the extracted feature units.

4. The method based on machine learning for reconstructing biological wastewater treatment processes according to claim 3, wherein methods for the multi-unit characterization comprise a one-hot algorithm.

5. The method based on machine learning for reconstructing biological wastewater treatment processes according to claim 4, wherein the performing multi-unit characterization on the biological treatment process by using the one-hot algorithm comprises:

firstly, characterizing an oxic tank unit as [1, 0, 0], an anoxic tank unit as [0, 1, 0], an anaerobic tank unit as [0, 0, 1], and a blank unit as [0, 0, 0]; and

secondly, performing feature stitching on the biological tank units, and uniformly characterizing the activated-sludge-method biological wastewater treatment process with n units, wherein blank units are used for supplementation when the number of units for characterizing the process is insufficient.

6. The method based on machine learning for reconstructing biological wastewater treatment processes according to claim 5, wherein in step (3), the constructing effluent basic quality prediction models of different biological treatment multi-unit combination processes comprises:
determining an input influent quality feature set and presetting an effluent quality target, selecting different machine learning algorithms to establish effluent basic quality prediction models of different biological treatment multi-unit combination processes based on the input influent quality feature set, and performing cross-validation experiments to evaluate the performance of the prediction models to obtain the optimal effluent basic quality prediction model; and screening out the effluent basic quality prediction models which satisfy the preset effluent quality target.

7. The method based on machine learning for reconstructing biological wastewater treatment processes according to claim 6, wherein in step (3), the constructing effluent ecological risk prediction models of different biological treatment multi-unit combination processes comprises:
determining an input influent quality feature set and presetting an ecological risk target, selecting different machine learning algorithms to establish effluent ecological risk prediction models of different biological treatment multi-unit combination processes based on the input influent quality feature set, and performing cross-validation experiments to evaluate the performance of the prediction models to obtain the optimal effluent ecological risk prediction model; and screening out the effluent ecological risk prediction models which satisfy the preset ecological risk target.

8. The method based on machine learning for reconstructing biological wastewater treatment processes according to claim 6 or 7, wherein when the cross-validation experiments are performed to evaluate the performance of the prediction models, the following three evaluation indexes are employed, and calculation methods for various indexes are:

$$\begin{cases} MAE = \frac{1}{n}\sum_{i=1}^{n} |y_i - \hat{y}_i| \\ MSE = \frac{1}{n}\sum_{i=1}^{n} (y_i - \hat{y}_i)^2 \\ R^2 = 1 - \frac{\sum_{i=1}^{n}(y_i - \hat{y}_i)^2}{\sum_{i=1}^{n}(y_i - \bar{y})^2} \end{cases}$$

wherein $y_i$ represents a true value, $\hat{y}_i$ represents a predicted value, $\bar{y}$ represents a mean of the sample, MAE represents a mean absolute error between the predicted value and the true value, MSE represents a mean squared error between the predicted value and the true value, and $R^2$ represents the overall performance of the prediction models.

9. The method based on machine learning for reconstructing biological wastewater treatment processes according to claim 7, wherein step (4) comprises:

(4.1) simulating and reconstructing all possible biological wastewater treatment short-range unit combination processes, and uniformly characterizing the reconstructed short-range unit combinations with n units; and
(4.2) under different influent quality scenarios, predicting the effluent quality of each reconstructed short-range biological treatment unit combination process, and screening out the reconstructed short-range biological treatment unit combination processes with the effluent quality up to standard according to whether prediction results satisfy the preset effluent quality target.

10. A system based on machine learning for reconstructing biological wastewater treatment processes, comprising:

a data acquisition and preprocessing module configured to acquire influent and effluent basic quality, ecological risk and process information data on the biological wastewater treatment process and perform data preprocessing;
a feature extraction and characterization module configured to perform feature extraction and multi-unit characterization on the biological wastewater treatment processes;
a prediction model construction module configured to construct effluent basic quality prediction models and effluent ecological risk prediction models of different biological treatment multi-unit combination processes;
a biological wastewater treatment process reconstruction and standard-reaching validation module configured to simulate and reconstruct all possible biological wastewater treatment short-range unit combination processes, perform effluent quality standard-reaching validation under different influent quality scenarios, and screen out the reconstructed short-range biological treatment unit combination processes with the effluent quality up to standard; and
a biological wastewater treatment process determination module configured to evaluate ecological risk of the reconstructed short-range biological treatment unit combination processes with the effluent quality up to standard on the basis of the effluent ecological risk predication models, and determine the optimal biological wastewater treatment process according to ecological risk control effects.

FIG. 1

## INTERNATIONAL SEARCH REPORT

| International application No. |
| --- |
| **PCT/CN2023/118126** |

**A.    CLASSIFICATION OF SUBJECT MATTER**

C02F3/00(2023.01)i;  C02F3/30(2023.01)i;  G06N20/00(2019.01)i

According to International Patent Classification (IPC) or to both national classification and IPC

**B.    FIELDS SEARCHED**

Minimum documentation searched (classification system followed by classification symbols)

IPC:  C02F G06

Documentation searched other than minimum documentation to the extent that such documents are included in the fields searched

Electronic data base consulted during the international search (name of data base and, where practicable, search terms used)

CNTXT; CNKI; VCN; USTXTC; WOTXTC; EPTXTC; Web of Science: 南京大学, 任洪强, 王瑾丰, 胡洁, 模型, 学习, 神经网络, 训练, 算法, 设计, 选择, 评估, 评价, 预测, 生化, 生物, 厌氧, 缺氧, 兼氧, 好氧, 有氧, 单元, 模块, 组合, 工艺, 流程, 过程, 方案, 特征, 提取, 表征, 优化, 最优, WWTP, machine learning, design+, select+, unit?, module?, biological, evaluat+, optimiz+, character+

**C.    DOCUMENTS CONSIDERED TO BE RELEVANT**

| Category* | Citation of document, with indication, where appropriate, of the relevant passages | Relevant to claim No. |
| --- | --- | --- |
| A | BOZKURT, H. et al. "Optimal WWTP process selection for treatment of domestic wastewater- A realistic full-scale retrofitting study" *Chemical Engineering Journal,* 09 November 2015 (2015-11-09), 447-458 ISSN: 1385-8947, <br> page 447, abstract, and pages 447-457, text, sections 1-4 | 1-10 |
| A | CN 104318335 A (NANJING UNIVERSITY) 28 January 2015 (2015-01-28) <br> description, paragraphs 6-25 | 1-10 |
| A | CN 107337272 A (ANHUI GUOZHEN ENVIRONMENTAL PROTECTION AND ENERGY CONSERVATION TECHNOLOGY CO., LTD.) 10 November 2017 (2017-11-10) <br> description, paragraphs 7-109 | 1-10 |
| A | CN 116119877 A (WUXI RUITAIHENG AUTOMATION SYSTEM TECHNOLOGY CO., LTD.) 16 May 2023 (2023-05-16) <br> description, paragraphs 4-89 | 1-10 |

☐ Further documents are listed in the continuation of Box C.    ☑ See patent family annex.

| | |
| --- | --- |
| *    Special categories of cited documents: <br> "A"  document defining the general state of the art which is not considered to be of particular relevance <br> "D"  document cited by the applicant in the international application <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| **20 May 2024** | **21 May 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/118126**

| Patent document cited in search report | | | Publication date (day/month/year) | Patent family member(s) | | | Publication date (day/month/year) |
|---|---|---|---|---|---|---|---|
| CN | 104318335 | A | 28 January 2015 | None | | | |
| CN | 107337272 | A | 10 November 2017 | CN | 107337272 | B | 02 March 2021 |
| CN | 116119877 | A | 16 May 2023 | None | | | |

Form PCT/ISA/210 (patent family annex) (July 2022)

**EP 4 434 944 A1**
**EP 4 434 944 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310107389
- CN 200810104988
- CN 200810104989